# EUROPÄISCHE PATENTSCHRIFT

(11) **EP 1 490 279 B1**
(45) Veröffentlichungstag und Bekanntmachung des Hinweises auf die Patenterteilung: **09.11.2005**
(21) Anmeldenummer: 03722209.8
(22) Anmeldetag: 06.03.2003
(51) Int. Cl.: B65G 1/137

(54) **VERFAHREN UND VORRICHTUNG ZUM KOMMISSIONIEREN VON WAREN**
METHOD AND DEVICE FOR PICKING GOODS
PROCEDE ET DISPOSITIF POUR LA PREPARATION DE MARCHANDISES

(30) Priorität: 18.03.2002 DE 10211717
(43) Veröffentlichungstag der Anmeldung: 29.12.2004
(73) Patentinhaber: Deutsche Post AG, 53113 Bonn (DE)
(72) Erfinder: SCHILDKNECHT, Susanne, 53179 BONN (DE)
(74) Vertreter: Jostarndt, Hans-Dieter
(86) Internationale Anmeldenummer: PCT/DE2003/000724
(87) Internationale Veröffentlichungsnummer: WO 2003/078280

(56) Entgegenhaltungen:
- DE-A- 4 131 567
- US-A- 4 501 528

## Beschreibung

Die Erfindung betrifft ein Verfahren zum Kommissionieren von Waren, wobei Kommissionierbehälter von einem Fördersystem zu Kommissionierstationen transportiert und in dem Bereich der Kommissionierstationen mit Ware befüllt werden können.

Die Erfindung betrifft insbesondere ein Verfahren zum Kommissionieren von Waren, wobei Kommissionierbehälter rechnergesteuert zu Kommissionierbereichen transportiert werden und wobei in den Kommissionierbereichen Standorte und Mengen von zu kommissionierenden Artikeln graphisch angezeigt werden.

Die Erfindung betrifft ferner ein für die Durchführung des Verfahrens geeignetes Kommissioniersystem.

Ein gattungsgemäßes Verfahren und ein gattungsgemäßes Kommissioniersystem sind in der Deutschen Offenlegungsschrift DE 41 31 567 A1 dargestellt, als auch in der US-A-4 501 528.

Dieses Kommissioniersystem beinhaltet ein Kommissionierleitsystem für ein Speichersystem mit in mehrere Kommissionierungsbereiche unterteilten Regalsystemen und einem Fördersystem zum Transport von Kommissionierbehältern, wobei das Regalsystem rechnergesteuerte Fachanzeigen aufweist, die das Kommissionierfach und die Zahl der zu entnehmenden Artikel sowie eine Quittiertaste aufweist.

Die bekannten gattungsgemäßen Kommissioniersysteme werden für unterschiedliche logistische Zwecke eingesetzt, beispielsweise im Versandhandel.

Die Deutsche Offenlegungsschrift DE 41 31 567 A1 beschreibt ein Kommissionierleitsystem für ein Kommissioniersystem mit in mehrere Kommissionierbereiche unterteilten Regalsystemen, wobei Kommissionierbehälter von dem Fördersystem zu den Kommissionierbereichen transportiert und in den Kommissionierbereichen mit Ware gefüllt werden können. Dieses bekannte Verfahren zeichnet sich dadurch aus, dass am Fördersystem Markierungen zur Erkennung des jeweiligen Kommissionierbehälters angeordnet sind, und dass die Kommissionierbehälter rechnergesteuert synchron zu den Fachanzeigen über das Fördersystem an der Markierung des zugehörigen Kommissionierbereichs positioniert werden.

Der Artikel "Hohe Ersatzteilverfügbarkeit trotz langer Wege" in der Zeitung "Fördern und Heben" 1993, Seiten 855 - 859 beschreibt ein automatisiertes Kommissioniersystem und enthält die technische Lehre, die Einlieferung der Waren zeitlich getrennt von der Kommissionierung durchzuführen. Die Einlagerung der Waren erfolgt über verschiedene Einlagerungs-mittel (Stapler und Einlager-Transportwagen). Einen Hinweis darauf, die Kommissionierbehälter für ein Befüllen der Kommissionierbereiche zu nutzen, enthält diese Druckschrift nicht.

Der Artikel "Mehr Flexibilität im Materialfluss" in der Zeitung "Fördern und Heben" 1996, Seiten 47-49 beschreibt einen Einsatz von Identifikationsmitteln in Fertigungsprozessen und in Lager- und Distributionszentren. Ein Ausführungsbeispiel für eine flexible Brillenglasfertigung zeigt ein Kommissioniersystem, bei dem Spezialbehälter auf Band- und Rollen-förderstrecken befördert werden. Ein anderes Ausführungs-beispiel betrifft ein Hochregallager, bei dem vorbereitete Paletten über Rollen-, Ketten- und Vertikalförderer trans-portiert werden. Das Ausführungsbeispiel mit den Paletten offen bart eine Einlagerung der Waren und ihre Auslagerung in umgekehrter Reihenfolge.

Der Erfindung liegt die Aufgabe zugrunde, ein gattungsgemäßes Verfahren so weiterzuentwickeln, dass die Transportkapazität und die Auslastung eines Fördersystems mit Transportbehältern weiter erhöht wird.

Erfindungsgemäß wird diese Aufgabe dadurch gelöst, dass den Kommissionierbehältern wenigstens zwei verschiedene Betriebszustände zugeordnet werden können, und dass eine Steuereinheit den Kommissionierbehältern einen der Betriebszustände zuordnet.

Die Erfindung sieht vor, ein Verfahren zum Kommissionieren von Waren so durchzuführen, beziehungsweise ein Kommissioniersystem so auszugestalten, dass voneinander verschiedene Betriebszustände realisiert werden.

Die Erfindung beinhaltet sowohl den Fall, dass verschiedene Betriebszustände gleichzeitig erfolgen als auch den Fall, dass die verschiedenen Betriebszustände zeitlich nacheinander erfolgen.

Zweckmäßigerweise beinhaltet wenigstens einer der Betriebszustände ein Befüllen der Kommissionierbehälter mit Waren aus den Kommissionierbereichen.

Eine besonders bevorzugte Ausführungsform der Erfindung zeichnet sich dadurch aus, dass in einem anderen Betriebszustand eine Entnahme von Waren aus wenigstens einem Teil der Kommissionierbehälter erfolgt.

Diese besonders bevorzugte Ausführungsform der Erfindung beinhaltet in besonderer Weise einen Einsatz des Fördersystems und wenigstens eines Teils der mit dem Fördersystem transportierten Kommissionierbehälter zum Nachfüllen von Waren in die Kommissionierbereiche.

Hierdurch ist es möglich, das Fördersystem sowohl für eine Zufuhr von Waren in die Kommissionierbereiche als auch für eine Entnahme von Waren aus den Kommissionierbereichen und der Zusammenstellung von Waren zu benutzen.

Insbesondere ist so möglich, dass in dem Kommisioniersystem Warenein- und Warenausgang gleichzeitig über das gleiche Beförderungsmittel erfolgen.

Vorzugsweise wird das Verfahren so durchgeführt, dass in Zeiten mit besonders starkem Warenausgang, beispielsweise in Zeitintervallen vor einem vorgesehenen Weitertransport der kommissionierten Waren in Richtung auf vorgesehene Transportziele, kein oder nur ein geringer Nachschub von Waren in die Kommissionierbereiche erfolgt. In anderen Zeiten, insbesondere nach einer Abholung der Kommissionierwaren, ist der Anteil der Kommissionierbehälter, die für einen Nachschub von Waren in die Kommissionierbereiche eingesetzt werden, erheblich höher. Hierdurch können sowohl die Kommissionierbehälter als auch das Fördersystem sowohl bezüglich ihrer Transportkapazität als auch ihrer zeitlichen Auslastung effektiv eingesetzt werden.

Ferner beinhaltet die Erfindung eine Implementation weiterer Funktionen in das Verfahren zum Kommissionieren von Waren und das hierzu geeignete Kommissioniersystem.

Eine weitere bevorzugte Ausführungsform der Erfindung, die beliebig mit den anderen Ausführungsformen kombinierbar ist, zeichnet sich dadurch aus, dass in einem der Betriebszustände eine Überprüfung der in den Kommissionierstationen befindlichen Warenmengen erfolgt.

Hierdurch ist es jederzeit möglich, den in einzelnen Teilbereichen der Kommissionierbereiche befindlichen Warenbestand genau zu erfassen, beispielsweise zu Inventurzwecken und/oder zur Überprüfung der Zufuhr von Waren zu den Teilbereichen der Kommissionierbereiche.

Zur weiteren Erhöhung der Effizienz des Verfahrens und des Kommissioniersystems ist es vorteilhaft, dass die Steuereinheit die Zuordnung der Betriebszustände zu den Kommissionierbehältern für jeden Kommissionierbehälter einzeln vornimmt.

Eine besonders bevorzugte Ausgestaltung hiervon zeichnet sich dadurch aus, dass der Warennachschub in wenigstens eine der Kommissionierstationen durch die Zuordnung des Entnahme-Betriebszustandes zu wenigstens einem in den Bereich der Kommissionierstation transportierten Kommissionierbehälter erfolgt, während in wenigstens einer weiteren Kommissionierstation das Befüllen eines der weiteren Kommissionierstation zugeordneten Kommissionierbehälters erfolgt.

Zur Erhöhung der Bedienungssicherheit und der Bearbeitungsgeschwindigkeit ist es vorteilhaft, dass in den Kommissionierbereichen Standorte und Mengen der zu kommissionierenden Waren und der wenigstens einem Kommissionierbehälter zugeordnete Betriebszustand dargestellt werden.

Hierbei ist es besonders zweckmäßig, dass die Angabe des Betriebszustandes für jeden Kommissionierbehälter und für jeden zu kommissionierenden Artikel separat angezeigt wird.

Die Erfindung betrifft ferner eine Vorrichtung zum Kommissionieren von Waren mit einem Fördersystem zum Transport von Kommissionierbehältern zu Kommissionierstationen und mit einer Steuereinheit (MFR).

Erfindungsgemäß zeichnet sich die Vorrichtung dadurch aus, dass die Materialflusssteuereinheit MFR mit Mitteln zur Zuordnung von Betriebszuständen an die Kommissionierbehälter ausgestattet ist.

Die Verfügbarkeit der Vorrichtung und die Vielseitigkeit ihrer Einsatzmöglichkeiten lassen sich dadurch erhöhen, dass die Zuordnung der Betriebszustände zu den Kommissionierbehältern für jeden Kommissionierbehälter individuell erfolgt.

Ferner ist es vorteilhaft, dass die Materialflusssteuereinheit MFR den Betriebszustand aus einem vorgebbaren Satz von Betriebszuständen auswählt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele.

Für jeden zur Lieferung anstehenden Auftrag soll zweckmäßigerweise eine Verfügbarkeitsprüfung gegen den frei verwendbaren Gesamtbestand (inkl. Reservierungen) erfolgen. Diese erneute Verfügbarkeitsprüfung ist erforderlich, um ausreichenden Bestand für die Kommissionierung im Lager sicherzustellen. Das Ergebnis dieser Prüfung kann von der Verfügbarkeitsprüfung zum Zeitpunkt der Auftragserfassung abweichen, weil dort auch geplante Zu- und Abgänge (aus Bestellungen und bereits erfassten Aufträgen) berücksichtigt werden. Die Verfügbarkeitsprüfung im Rahmen der Versandfreigabe darf dagegen solche geplanten Bestandsveränderungen nicht mehr berücksichtigen, sondern muss sich auf den tatsächlich zum Zeitpunkt der Kommissionierung vorhandenen, frei verwendbaren Bestand beschränken.
Die Verfügbarkeitsprüfung im Rahmen der Versandfreigabe muss zum geplanten Datum der Versandbearbeitung erfolgen. Dieses Datum wird als externer Parameter mit jedem Auftragsablauf vorgegeben. Dieses Datum ergibt sich dabei wie folgt:

B-to-B Aufträge und eilige Aufträge (mit 24h Lieferversprechen), die bis zu einer bestimmten Uhrzeit (z.B. 11:30h) erfasst wurden, sollen noch am gleichen Tag kommissioniert und versandt werden.

Alle anderen Aufträge des Einzelbezuges sollen am folgenden Arbeitstag kommissioniert und versendet werden.

Für alle Abo-Aufträge muss das (geplante) Versandbearbeitungsdatum ebenso wie der geplante Liefertermin (= Tag der Aussendung und Rechnungsdatum) aus der manuellen Übergabe in die Versandfreigabe übergeben werden.

Die Verfügbarkeitsprüfung muss für alle lieferrelevanten Auftragspositionen (Artikel und Menge) erfolgen. Ist die Verfügbarkeit aller Positionen zum geplanten Kommissionierdatum positiv geprüft, kann die Bearbeitung des nachfolgenden Schrittes beginnen.

Darüber hinaus gilt die nachfolgende Regelung ausschließlich für den Einzelbezug.

Ist die Verfügbarkeit für eine oder mehrere Positionen nicht gegeben, wird der gesamte Auftrag zunächst nicht für den Versand freigegeben. Der Auftrag erhält ein Zähl-Kennzeichen, welches die Anzahl der Prüfläufe beschreibt. Durch die nicht erfolgte Versandfreigabe geht der Auftrag 'zurück' in den nicht selektierten Auftragsbestand. Von dort wird er automatisch mit der nächsten regulären Selektion erneut in die Versandfreigabe übergeben und durchläuft wieder die o.g. Prüfung. Dabei wird der o.g. Zähler um eins hochgezählt. Dieser Vorgang wird so oft wiederholt, bis entweder alle Positionen verfügbar sind oder der Zähler größer als ein extern vorgegebener Grenzwert (z.B. fünf Tage) ist. In diesem Fall werden alle verfügbaren Positionen des Auftrages beliefert, vorausgesetzt, sie unterschreiten nicht einen ebenfalls extern vorgegebenen Lieferwert. Auch dieser Grenzwert (z.B 5 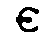 ) muss als Parameter vorgegeben sein.

Diejenigen Positionen, die nicht im Rahmen der Teillieferung ausgeliefert werden, müssen sowohl in Form eines Fehlerprotokolls als Druckausgabe an die ZAV gemeldet werden als auch auf der Druckausgabe des Lieferscheins zur Teillieferung mit einem Hinweis auf die zum jeweiligen Zeitpunkt nicht lieferbaren Artikel erwähnt werden.

### Aufbau Fehlerprotokoll

| | |
|---|---|
| Listenkopf | Name des Auftragsablaufs Datum und Uhrzeit des Auftragsablaufs Empfänger Anzahl der Sätze des Fehlerprotokolls |
| Listenaufbau in Tabellenform | Belegnummer des Auftrages Positionsnummer der nicht gelieferten Auftragsposition Grund der nicht erfolgten Lieferung Artikelnummer Bestellmenge |
| Summenblatt (eine Zeile je Artikel) | Artikelnummer Artikelbezeichnung Anzahl Positionen je Artikel Summe Bestellmenge aller Positionen |
| | je Artikel |

Grundsätzlich kann die dargestellte Verfügbarkeitsprüfung auch auf andere Weise erfolgen.

Der Einsatz einer Verfügbarkeitsprüfung unterstützt sowohl eine Inventur der Waren als auch eine gezielte Zufuhr von Waren zu den einzelnen Kommissionierbereichen.

Es wird automatisch überprüft, ob sich in den Kommissionierbereichen eine ausreichende Menge zur Erfüllung von in vorgebbaren Zeitintervallen verfügbaren Waren vorhanden ist.

Zweckmäßigerweise wird auf der Grundlage von Daten über auszuführende Lieferaufträge und vorhandenen Warenbestand in den einzelnen Kommissionierbereichen ermittelt, ob und in welchen Mengen Nachschublieferungen an die einzelnen Kommissionierbereiche erforderlich sind. Diese Nachschublieferungen werden von dem System automatisch ausgelöst, sodass Kommissionierbehälter beispielsweise zunächst zu einer Beladestation transportiert und dort mit eingehenden Waren befüllt werden, und dass die Kommissionierbehälter anschließend in Kommissionierbereiche transportiert werden.

In den Kommissionierbereichen sind die so transportierten Waren entnehmbar und dienen so zum Warennachschub in diesen Kommissionierbereichen.

Hierdurch ist es möglich, die gleichen Kommissionierbehälter, die in einem nachfolgenden, beziehungsweise vorausgegangenen Verfahrensschritt zu einem Versand von Waren von den Kommissionierbereichen in Richtung auf einen Warenausgang dienten, ebenfalls für die Zufuhr von Waren zu den Kommissionierbereichen einzusetzen. Auch ist es so möglich, das für den Transport der Kommissionierbehälter dienende Fördersystem, beispielsweise ein Rollenband, sowohl für eine Zufuhr von Waren zu den Kommissionierbereichen als auch für einen Abtransport der Waren aus den Kommissionierbereichen einzusetzen.

## Patentansprüche

1. Verfahren zum Kommissionieren von Waren, wobei Kommissionierbehälter von einem Fördersystem zu Kommissionierstationen transportiert und in dem Bereich der Kommissionierstationen mit Ware befüllt werden können,
**dadurch gekennzeichnet,**
**dass** den Kommissionierbehältern wenigstens zwei verschiedene Betriebszustände zugeordnet werden können, und dass eine Steuereinheit den Kommissionierbehältern einen der Betriebszustände zuordnet, wobei ein erster Betriebszustand ein Befüllen der Kommissionierbehälter mit Waren aus den Kommissionierbereichen beinhaltet, während in einem zweiten Betriebszustand eine Entnahme von Waren aus wenigstens einem Teil der Kommissionierbehälter erfolgt und wobei die verschiedenen Betriebszustände gleichzeitig erfolgen.

2. Verfahren nach Anspruch 1,
**dadurch gekennzeichnet,**
**dass** in wenigstens einem der Betriebszustände eine Mengenerfassung der in den Kommissionierstationen befindlichen Waren erfolgt.

3. Verfahren nach einem oder beiden der Ansprüche 1 und 2,
**dadurch gekennzeichnet,**
**dass** die Steuereinheit die Zuordnung der Betriebszustände zu den kommissionierbehältern für jeden Kommissionierbehälter einzein vornimmt.

4. Verfahren nach Anspruch 3,
**dadurch gekennzeichnet,**
**dass** ein Waronnachschub in wenigstens eine der Kommissionierstationen durch die Zuordnung eines Entnahme-Betriebszustandes zu wenigstens einem in den Bereich der Kommissionierstation transportierten Kommissionierbehälter erfolgt, während in wenigstens einer weiteren Kommissionierstation ein Befüllen eines der weiteren Kommissionierstation zugeordneten Kommissionierbehälters erfolgt.

5. Verfahren nach einem oder mehreren der vorangegangenen Ansprüche,
**dadurch gekennzeichnet,**
**dass** in den Kommissionierbereichen Standorte und Mengen der zu kommissionierenden Waren und der wenigstens einem Kommissionierbehälter zugeordnete Betriebszustand dargestellt werden.

6. Verfahren nach Anspruch 5,
**dadurch gekennzeichnet,**
**dass** die Angabe des Betriebszustandes für jeden Kommissionierbehälter und für jeden zu kommissionierenden Artikel separat angezeigt wird.

## Claims

1. A method for picking articles, whereby picking containers are transported by a conveying system to picking stations and can be filled with articles in the area of the picking station,
**characterized in that**
at least two different operating states can be assigned to the picking containers, and **in that** a control unit assigns an operating state to the picking containers, whereby a first operating state comprises filling the picking containers with articles from the picking areas, whereas in a second operating state, articles are removed from at least some of the picking containers and whereby the different operating states are performed simultaneously.

2. The method according to Claim 1,
**characterized in that**,
in at least one of the operating states, the number of articles present in the picking stations is recorded.

3. The method according to one or both of Claims 1 and 2,
**characterized in that**
the control unit carries out the assignment of the operating states to the picking containers individually for each picking container.

4. The method according to Claim 3,
**characterized in that**
an article feed into at least one of the picking stations takes place through the assignment of a removal operating state to at least one picking container transported into the area of the picking station, whereas in at least one other picking station, a picking container associated assigned to the another picking station is filled.

5. The method according to one or more of the preceding claims,
**characterized in that**,
in the picking areas, locations and quantities of the articles to be picked and the operating state assigned to at least one picking container are all displayed.

6. The method according to Claim 5,
**characterized in that**
the indication of the operating state is displayed separately for each picking container and for each article to be picked.

## Revendications

1. Procédé pour réceptionner des marchandises, dans lequel des réceptacles de réception sont transportés vers des stations de réception par un système de transport et peuvent être remplis de marchandises dans la zone des stations de réception,
**caractérisé en ce**
**qu'**au moins deux différents états de fonctionnement peuvent être attribués aux réceptacles de réception, et qu'une unité de pilotage attribue aux réceptacles de réception un des états de fonctionnement, un premier état de fonctionnement comprenant un remplissage des réceptacles de réception avec des marchandises à partir des zones de réception, alors que dans un second état de fonctionnement des marchandises sont extraites d'au moins une partie des réceptacles de réception et les différents états de fonctionnement ont lieu en même temps.

2. Procédé selon la revendication 1,
**caractérisé en ce**
**que** dans au moins un des états de fonctionnement un recensement de la quantité des marchandises se trouvant dans les stations de réception est effectué.

3. Procédé selon une ou les deux des revendications 1 et 2,
**caractérisé en ce**
**que** l'unité de pilotage entreprend l'attribution des états de fonctionnement aux réceptacles de réception individuellement pour chaque réceptacle de réception.

4. Procédé selon la revendication 3,
**caractérisé en ce**
**qu'**un ravitaillement de marchandises dans au moins une des stations de réception est effectué par l'attribution d'un état de fonctionnement en extraction à au moins un réceptacle de réception étant transporté dans la zone de la station de réception, alors que dans au moins une autre station de réception est effectué un remplissage d'un réceptacle de réception qui est attribué à l'autre station de réception.

5. Procédé selon une ou plusieurs des revendications précédentes,
**caractérisé en ce**
**que** les lieux et les quantités des marchandises à réceptionner et l'état de fonctionnement attribué à au moins un réceptacle de réception sont représentés dans les zones de réception.

6. Procédé selon la revendication 5,
**caractérisé en ce**
**que** l'indication de l'état de fonctionnement est affiché séparément pour chaque réceptacle de réception et pour chaque article à être réceptionné.
